# EUROPEAN PATENT APPLICATION

(11) **EP 3 125 376 A1**
(43) Date of publication of application: **01.02.2017**
(21) Application number: 16181031.2
(22) Date of filing: 25.07.2016
(51) Int. Cl.: H01R 31/06, G10H 3/18, H04R 1/04, H02J 1/00

(54) **PORTABLE DEVICE WITH DC AND USB POWER SUPPLIES**

(30) Priority: 27.07.2015 US 201514809679
(71) Applicant: Gibson Brands, Inc., Nashville, TN 37217 (US)
(72) Inventor: Jursch, Gus, Agoura Hills, 91301 (US)
(74) Representative: dompatent von Kreisler Selting Werner - Partnerschaft von Patent- und Rechtsanwälten mbB

(57) **Abstract**

A portable device (100) having an outlet receptacle (104) comprising multiple connector receptacles (108, 112). The outlet receptacle (104) includes a female receptacle (108) suitable for providing a DC voltage in the 1 volt to 240 volt range to a corresponding male plug and a USB receptacle (112) capable of delivering charging power to a corresponding USB insert. The outlet receptacle (104) is supplied with an AC power cord and includes a transformer (122) connected to this AC power input and an AC/DC converter (124) connected to the transformer (122) and providing DC power to the female receptacle (108) and USB receptacle (112).

## Description

### Field of the Invention

The present invention relates to a multi-use power adapter device, and specifically to multi-use power adapter devices providing both low and high power connectivity remote from power source.

### Background

Musicians and other individuals often need to use portable electronic devices to perform their work. Typically, these are battery operated electronic devices, such as cellular phones, laptop computers and electronic games. The problem with such products is the need for periodically recharging the batteries in such products. Heretofore, charging the batteries has been limited to devices requiring the electronic device to be at or very near the power source. Thus the electronic device often sits remote from where the musician or other individual is preforming their work. The remoteness of the electronic device limits the user's ability to interact with the electronic device.

Accordingly, there is a remote power source provided on other electrically powered equipment that provides a remote power source for other electronic devices.

### Summary

A portable electric device having an outlet receptacle is provided. More specifically, an electrically powered device capable of being electrically connected with a remote electrical power source for receiving and providing AC electrical power is provided. The electrically powered device includes an outlet receptacle. The outlet receptacle includes a female receptacle capable of delivering low voltage DC current to a corresponding male insert. Additionally included is a Universal Serial Bus (USB) receptacle capable of delivering low voltage DC current to a USB plug. Further provided is a transformer and an AC/DC converter for converting AC current to DC current. The female receptacle, the USB receptacle, the transformer and the AC/DC converter being electrically connected to form an electrical unit. Further including a remote electrical power source electrically connected to the electrical unit to provide a source of AC current.

Also provided is a remote powered system. The remote powered system includes a remote power device electrically connected with an AC power source. An outlet receptacle is electrically connected with the remote powered device. The outlet receptacle includes a female receptacle capable of delivering high voltage DC current to a corresponding male insert. Also included is a Universal Serial Bus (USB) receptacle capable of delivering low voltage DC current to a USB plug, a transformer, and an AC/DC converter for converting AC current to DC current. The female receptacle, the USB receptacle, the transformer and the AC/DC converter being electrically connected to form an electrical unit.

Additionally provided is a method for charging at least one portable electronic device (PED). The method includes providing a remote power device having an outlet receptacle in electrical connection with a remote alternating current (AC) power source. Also included is providing a female receptacle capable of delivering low voltage DC current to a corresponding male insert, the female receptacle being electrically connected to said outlet receptacle. Further included is providing a Universal Serial Bus (USB) receptacle configured to receive a USB plug, the USB receptacle being electrically connected to said outlet receptacle and connecting a portable electronic device (PED) to the USB receptacle.

This summary is not intended to identify key or essential features of the claimed subject matter, nor is it intended to be used as an aid in limiting the scope of the claimed subject matter.

Other principal features of the current disclosure will become apparent to those skilled in the art upon review of the following drawings, the detailed description, and the appended claims.

### Brief Description of the Drawings

These features, aspects and advantages of the present invention will become better understood with regard to the following description, appended claims and accompanying figures where:
FIG. 1 is a plan view illustrating a remote powered outlet receptacle having features of the invention;
FIG. 2 is a front view of an alternative embodiment of the outlet receptacle illustrated in FIG. 1;
FIG. 3 is a front view of another alternative embodiment of the remote receptacle having features of the invention; and,
FIG. 4 is a system diagram depicting features of an embodiment.

### Detailed Description

The following discussion describes in detail one embodiment of the invention and several variations of that embodiment. This discussion should not be construed, however, as limiting the invention to those particular embodiments. Practitioners skilled in the art will recognize numerous other embodiments as well.

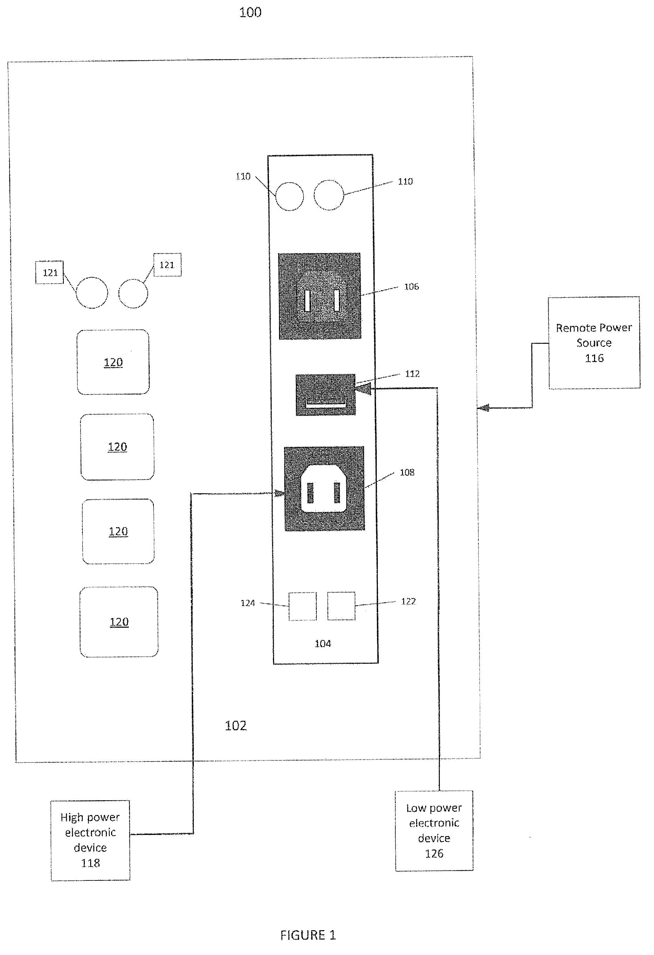

With particular reference to Figure 1, an aspect of the remote powered outlet 100 is illustrated. Included are a remote power source 116 providing electrical power to a remote power device 102. The remote power device 102 includes outlet receptacle 104 that is configured to provide low and high voltage DC current electrical power to a high power electronic device 118 and a low power electronic device 126.

In an embodiment, the remote power source 116 is a structure such as a home, office, commercial/residential property, generator, or the like that is capable of producing the AC current with an electrical potential between about 100 volt to about 240 volts (+/- 10%). The nature of the remote power source 116 is not intended to be limiting in any way.

In an embodiment, the remote power device 102 is an electrical musical device such as an amplifier, speaker, keyboard, mixing board, or synthesizer. Additionally, the remote power device 102 may be any other music or music related electronic equipment such as, without limitation, a controller and such used by DJ's to mix and scratch musical arrangements. Any other electrical powered device 102 is considered within the scope of this invention as well. The remote powered device 102 may include any number of controls 120 and indicators 121 as may be typical depending upon the nature of the remote power device 102. The nature of the remote power device 102 is not intended to be limiting in any way.

In an embodiment, the high power electronic device 118 is any device that is powered by DC current in the range of about 50 volt to about 240 volt range (+/-10%). Suitable, non-limiting example of such devices include laptop and other personal computing devices.

In another embodiment, the lower power electronic device 126 is any electronic device powered by DC current in the about 1 volt to about 49 volt range (+/- 10%). Suitable, non-limiting example of such devices include smart phones, notepads, e-readers, cameras, and tablets.

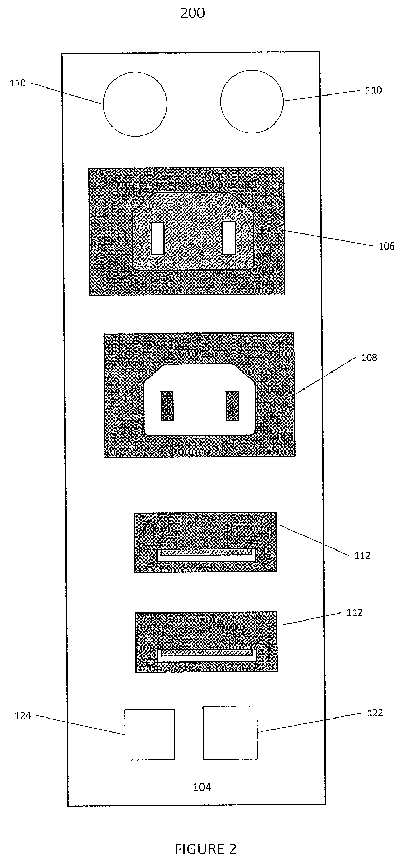

With particular emphasis on Figures 1 and 2, in an embodiment, the outlet receptacle 104 includes a male receptacle 106, a female receptacle 108, and at least one USB receptacle 112. The outlet receptacle 104 may include indicators such as LED lights 110. In an embodiment, the outlet receptacle 104 may be configured with only female receptacles 108 and at least one USB receptacle 112. Additionally, in another embodiment, the outlet receptacle 104 may include only male receptacles 106 and at least one USB receptacle 112.

In an embodiment, the outlet receptacle includes a step-down transformer 122, and an AC/DC converter 124. The male receptacles 106, female receptacle 108, USB receptacle 112, the transformer 122 (step up and/or down) and the AC/DC converter 124 are electrically connected to form an operative electrical unit. The electrical unit is capable of providing low voltage DC current at the USB receptacle 112 while also providing higher voltage DC current to the male receptacle 106 and female receptacle 108 based on AC power received from a remote power source 116.

The transformer 122 can be any of the many kinds of step-down/up transformers known in the art capable of taking a high voltage AC current and reducing it to a low voltage current or vice versa. In an exemplary embodiment, the AC current has an electrical potential of about 110 volts, that is, an electrical potential between about 100 volts and about 120 volts. The transformer 122, however, can be chosen to reduce house currents of much higher voltage or a much lower voltage. One transformer 122 known to be useable in the invention is a Hammond 166F12 110 volt AC/12.6VCT.

In an embodiment, the low voltage DC current available at USB receptacle 112 is about 12 volts, that is, between about 5 volts and about 20 volts. An infinite range of other voltages can also be provided by choosing different step-down transformers 122. In one embodiment the step-down transformer 122 is of a variable type, wherein the low voltage DC current available at the USB receptacle 112 is adjustable, such as by a dial 36 (not shown) disposed on the outlet receptacle 104.

The AC/DC converter 124 can be any of the many AC/DC converters known in the art. In one embodiment, the AC/DC converter 124 is a full bridge rectifier (not shown). In other embodiments, the AC/DC converter 124 can comprise one or more switches, such as diode switches, which serve to allow current flow in only one direction (not shown). One AC/DC converter 124 known to be useable in the invention is a General Semiconductor DF00FM bridge rectifier.

Typically, the step-down transformer 122 and the AC/DC converter 124 are combined into a single housing to form a single transformer/converter element. However, the elements may be formed separately as well.

In an embodiment, the outlet receptacle 104, may further include a filter (not shown) for filtering out AC "ripple." The filter is provided by an electrolytic capacitor (not shown). One filter known to be useable in the invention is a United Chemicon LXF16VB22M12X30L (2200 µF 16V) cup. The outlet receptacle 104 may also include a resistor (not shown) to limit and control current. The various components of the outlet receptacle 104 are electrically connected to form the electrical unit by wires or other types of electrical connections.

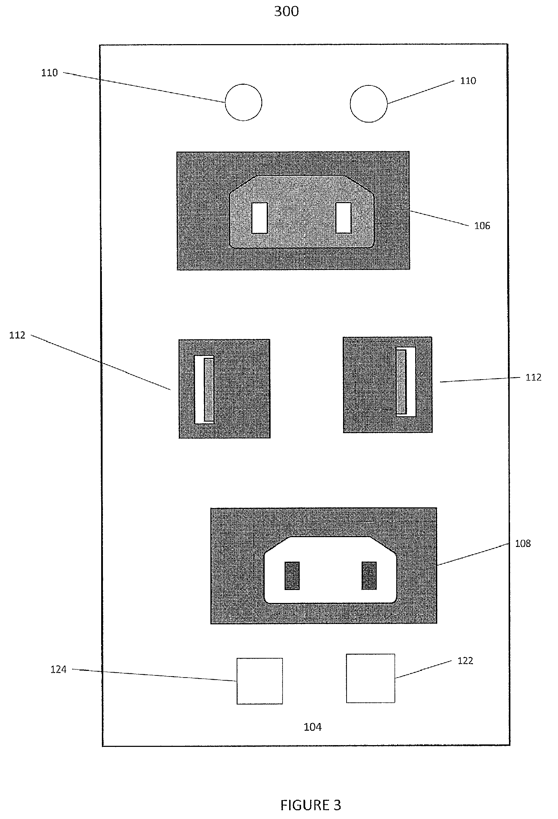

With particular reference to Figures 2 and 3, additional embodiments are illustrated. In particular, the Figures illustrate non-limiting example of alternative configurations for the male/female receptacles 106, 108, respectively, and the USB receptacle(s) 112. The location and number of receptacles in not intended to be limiting in any way. As depicted in the Figures, a standard US 110 v receptacles are shown. However, other male/female receptacles 106,108 are within the scope of this disclosure. For example, the male/female receptacles 106,108 may be configured for use worldwide such as in the UK/US/AU/EU. Any electrical socket connection falling within the disclosed voltage range is considered within this disclosure. Suitable non-limiting examples include: ECA ANEMA WD-1 1-15P; ECA BNEMA WD-1 5-15P; ECA IAS 3112-1964,NZS 198; and, ECA HSII-32-1971. Likewise, USB receptacle(s) 112 are used to show exemplary locations of the low power receptacles. However, non-USB low power receptacles capable of supplying power within identified low power range are also within the scope of this disclosure.

In another embodiment, telephone/data jacks/ports (not shown) may also be included with the outlet receptacle 104 without departing from the spirit and scope of this disclosure.

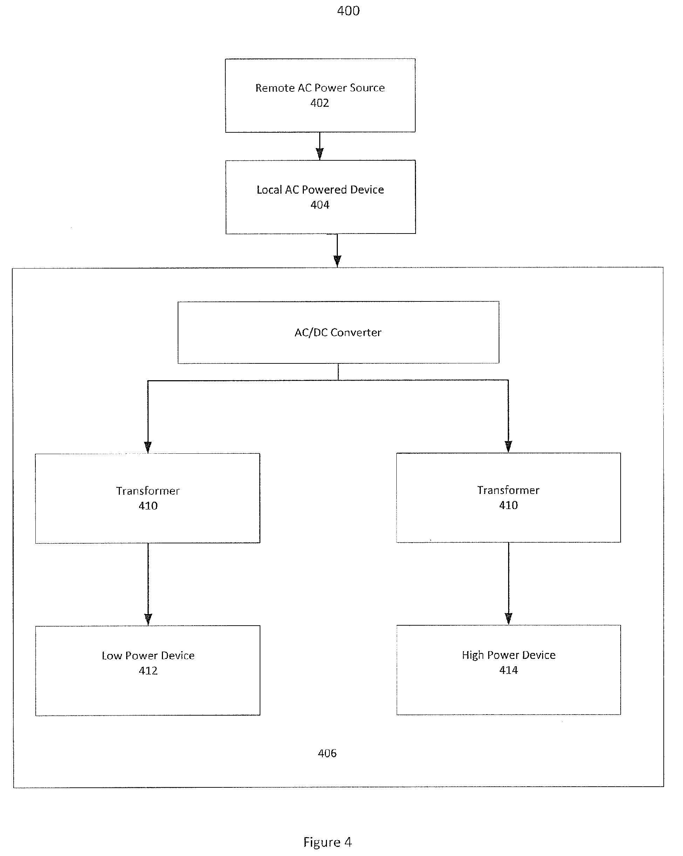

In an embodiment, Figure 4 illustrates a block diagram illustrating the basic electrical components of the remote power outlet receptacle system 400. A local AC power source 404 is electrically connected with a remote AC power source 402. The local AC per source includes a local AC power receptacle 406. The local AC power receptacle includes an AC/DC converter that converts the AC power to DC power for supplying low power current to the appropriate USB receptacle 112 and high power current to the male receptacles 106, female receptacle 108. Transformers 410 are used to step-up/down voltage as needed for respective receptacle to provide a low output DC voltage to a low power device 412 via the USB receptacle 112 and a high output DC voltage to a high power device 414 via the male/female receptacle 106/108.

The embodiments allow a user to conveniently charge or otherwise power their electronic devices without having to store and unstore a separate charging/power device.

### ILLUSTRATIVE EMBODIMENTS

The following embodiments are illustrative and are not intended to limit the scope of the disclosed subject matter.
1. A portable electric device having an outlet receptacle, the outlet receptacle comprising:
   an electrically powered device capable of being electrically connected with a remote electrical power source for receiving and providing AC electrical power, the electrically powered device including an outlet receptacle, the outlet receptacle comprising:
   a female receptacle capable of delivering low voltage DC current to a corresponding male insert;
   a Universal Serial Bus (USB) receptacle capable of delivering low voltage DC current to a USB plug,
   a transformer; and,
   an AC/DC converter for converting AC current to DC current, the male receptacle, the female receptacle, the USB receptacle, the transformer and the AC/DC converter being electrically connected to form an electrical unit.
2. The outlet receptacle of claim 1 wherein the AC current provided to the outlet receptacle has an electrical potential of about 100 volts to about 240 volts.
3. The outlet receptacle of claim 1 wherein the female receptacle has a DC current that has a potential of about 100 volts to about 120 volts.
4. The outlet receptacle of claim 1 wherein the male receptacle has a DC current that has a potential of about 100 volts to about 120 volts.
5. The outlet receptacle of claim 1 wherein the USB receptacle has a DC current that has a potential of about 5 volts.
6. The outlet receptacle of claim 1 wherein the step-down transformer and the AC/DC converter are combined into a single transformer/converter element.
7. The outlet receptacle of claim 1 wherein the electrical unit further comprises a DC voltage adjustor for adjusting the potential of the DC current at the USB receptacle.
8. A remote powered system, comprising:
   a remote power device electrically connected with an AC power source;
   an outlet receptacle electrically connected with the remote powered device; the outlet receptacle including:
      a female receptacle capable of delivering low voltage DC current to a corresponding male insert;
      a Universal Serial Bus (USB) receptacle capable of delivering low voltage DC current to a USB plug,
      a transformer; and,
      an AC/DC converter for converting AC current to DC current, the male receptacle, the female receptacle, the USB receptacle, the transformer and the AC/DC converter being electrically connected to form an electrical unit.
9. The remote powered system of claim 8 wherein the female receptacle has a potential of about 100 volts to about 120 volts.
10. The remote powered system of claim 8 wherein the electrical unit further comprises a DC voltage adjustor for adjusting the potential of the DC current at the female receptacle.
11. The remote powered system of claim 8 wherein the remote power device is at least one of an amplifier, speaker stack, keyboard, synthesizer, turntable, and recorder.
12. The remote powered system of claim 8, further comprising a Light Emitting Diode (LED) to indicate when the USB receptacle is receiving power.
13. A method for charging at least one portable electronic device (PED), the method comprising:
   providing a remote power device having an outlet receptacle in electrical connection with a remote alternating current (AC) power source,
   providing a female receptacle capable of delivering low voltage DC current to a corresponding male insert, the female receptacle being electrically connected to said outlet receptacle;
   providing a Universal Serial Bus (USB) receptacle configured to receive a USB plug, the USB receptacle being electrically connected to said outlet receptacle; and
   connecting a portable electronic device (PED) to the USB receptacle.
14. The method of claim 13, wherein the DC to the USB receptacle has an output voltage of about 5 volts.
15. The method of claim 13, wherein the DC to the female receptacle has an output voltage of about 12 volts.
16. The method of claim 13, further comprising providing a Light Emitting Diode (LED) to indicate when the USB receptacle is receiving power.

Having thus described various aspects of this disclosure, it should be apparent that numerous structural modifications and adaptations may be resorted to without departing from the scope and fair meaning of the disclosure as set forth hereinabove and as described hereinbelow by the claims. Moreover, it is not necessary for a device or method to address each and every problem sought to be solved by the present invention for it to be encompassed by the present claims. Furthermore, no element, component or method step in the present disclosure is intended to be dedicated to the public regardless of whether the element, component, or method step is explicitly recited in the claims. No claim element herein is to be construed under the provisions of 35 U.S.C. 112, sixth paragraph, unless the element is expressly recited using the phrase "means for."

## Claims

1. A portable electric device having an outlet receptacle, the device comprising:
an electrically powered device capable of being electrically connected with a remote electrical power source for receiving and providing AC electrical power, the electrically powered device including an outlet receptacle, the outlet receptacle comprising:
a female receptacle capable of delivering low voltage DC current to a corresponding male insert;
a Universal Serial Bus (USB) receptacle capable of delivering low voltage DC current to a USB plug,
a transformer; and,
an AC/DC converter for converting AC current to DC current, the male receptacle, the female receptacle, the USB receptacle, the transformer and the AC/DC converter being electrically connected to form an electrical unit.

2. The device of claim 1 wherein the AC current provided to the electrically powered device has an electrical potential of about 100 volts to about 240 volts.

3. The device of claim 1 wherein the electrically powered device is at least one of an amplifier, speaker, keyboard, synthesizer, and mixing board.

4. The device of claim 1 wherein the female receptacle has a DC current that has a potential of about 100 volts to about 240 volts.

5. The device of claim 1 wherein the USB receptacle has a DC current that has a potential of about 5 volts.

6. The device of claim 1 wherein the step-down transformer and the AC/DC converter are combined into a single transformer/converter element.

7. The device of claim 1 wherein the electrical unit further comprises a DC voltage adjustor for adjusting the potential of the DC current at the USB receptacle.

8. A remote powered system, comprising:
a remote power device electrically connected with an AC power source;
an outlet receptacle electrically connected with the remote powered device; the outlet receptacle including:
a female receptacle capable of delivering low voltage DC current to a corresponding male insert;
a Universal Serial Bus (USB) receptacle capable of delivering low voltage DC current to a USB plug,
a transformer; and,
an AC/DC converter for converting AC current to DC current, the male receptacle, the female receptacle, the USB receptacle, the transformer and the AC/DC converter being electrically connected to form an electrical unit.

9. The remote powered system of claim 8 wherein the female receptacle has a potential of about 100 volts to about 120 volts.

10. The remote powered system of claim 8 wherein the electrical unit further comprises a DC voltage adjustor for adjusting the potential of the DC current at the female receptacle.

11. The remote powered system of claim 8 wherein the remote power device is at least one of an amplifier, speaker stack, keyboard, synthesizer, turntable, and recorder.

12. The remote powered system of claim 8, further comprising a Light Emitting Diode (LED) to indicate when the USB receptacle is receiving power.

13. A method for charging at least one portable electronic device (PED), the method comprising:
providing a remote power device having an outlet receptacle in electrical connection with a remote alternating current (AC) power source,
providing a female receptacle capable of delivering low voltage DC current to a corresponding male insert, the female receptacle being electrically connected to said outlet receptacle;
providing a Universal Serial Bus (USB) receptacle configured to receive a USB plug, the USB receptacle being electrically connected to said outlet receptacle; and
connecting a portable electronic device (PED) to the USB receptacle.

14. The method of claim 13, wherein the DC to the USB receptacle has an output voltage of about 5 volts.

15. The method of claim 13, wherein the DC to the female receptacle has an output voltage of about 12 volts.
